# EUROPÄISCHE PATENTSCHRIFT

(11) **EP 1 375 622 B1**
(45) Veröffentlichungstag und Bekanntmachung des Hinweises auf die Patenterteilung: **15.09.2004**
(21) Anmeldenummer: 03012203.0
(22) Anmeldetag: 05.06.2003
(51) Int. Cl.: C09J 183/04, C08K 5/00

(54) **Selbsthaftende additionsvernetzende Siliconzusammensetzungen**
Self-adhesive addition curable silicone compositions
Compositions de silicone auto-adhésives réticulantes par addition

(30) Priorität: 14.06.2002 DE 10226626
(43) Veröffentlichungstag der Anmeldung: 02.01.2004
(73) Patentinhaber: Wacker-Chemie GmbH, 81737 München (DE)
(72) Erfinder: Fehn, Armin, Dr., 84561 Mehring (DE); Müller, Philipp, Dr., 84489 Burghausen (DE); Leitermann, Christine, 84489 Burghausen (DE); Mesnaritsch, Robert, 84524 Neuötting (DE)
(74) Vertreter: Gössmann, Christoph

(56) Entgegenhaltungen:
- EP-A- 0 686 671
- EP-A- 1 035 162
- US-A- 5 438 094

## Beschreibung

Gegenstand der Erfindung sind selbsthaftende additionsvernetzende Siliconzusammensetzungen, additionsvernetzte Siliconelastomere sowie Verfahren zu ihrer Herstellung.

In US 5,438,094 werden selbsthaftende additionsvernetzende Siliconzusammensetzungen beschrieben, die als Vernetzer ganz bestimmte Organohydrogenpolysiloxane (B) und als Haftvermittler (C) spezielle Verbindungen mit zumindest einer aliphatischen ungesättigten Gruppe und zwei Phenylenskeletten pro Molekül enthalten.

Als Organohydrogensiloxane (B) werden solche der Formel (1), (2) oder (3) beansprucht.

R₃Si(O-SiHR)ₙOSiR₃ (1);

(OSiHR)ₙ-Cyclen (2);

R₄₋₁Si(OSiHR₂)₁ (3)

In den Formeln sind R eine substituierte oder unsubstituierte einwertige Kohlenwasserstoff-Gruppe, 1 ist 3 oder 4 und n eine ganze Zahl von zumindest 3.

In US5438094 wird dagegen eine Organopolysiloxan-Komponente als nicht erfindungsgemäß beschrieben, die folgende Struktur ausweist:

Me₃Si- (SiHMe)₅- (OSiMe₂)₈-SiMe₃

Bei den bekannten selbsthaftenden additionsvernetzenden Siliconzusammensetzungen ist die Haftung, insbesondere auf diversen Kunststoffen, noch nicht optimal. Es besteht daher der Bedarf, neue selbsthaftende additionsvernetzende Siliconzusammensetzungen mit verbesserter Haftung zur Verfügung zu stellen.

Aufgabe der Erfindung ist es, die Nachteile des Standes der Technik zu überwinden und insbesondere die Haftung auf verschiedenen Kunststoffen und Metallen zu verbessern.

Gegenstand der Erfindung sind additionsvernetzende Siliconzusammensetzungen enthaltend:
(A) Diorganopolysiloxane der allgemeinen Formel (1)

   R¹ ₐR² _{b}SiO_{(4-a-b)/2} (1),

   in der
   - **R**^{**1**}: Hydroxylrest oder einen monovalenten, gegebenenfalls halogensubstituierten, gegebenenfalls O-, N-, S- oder P-Atome enthaltenden Kohlenwasserstoffrest mit 1 bis 20 Kohlenstoffatomen, der frei von aliphatisch ungesättigten Gruppen ist,
   - **R**^{**2**}: einen monovalenten, aliphatisch ungesättigten, gegebenenfalls halogensubstituierten, gegebenenfalls O-, N-, S- oder P-Atome enthaltenden Kohlenwasserstoffrest mit 1 bis 10 Kohlenstoffatomen bedeutet,
   - **a**: Werte von 1,0 bis 2,0 bedeuten,
   - **b**: Werte von 0,0003 bis 2 bedeuten, mit der Maßgabe, dass 1.5<(**a+b**)<3.0, dass pro Molekül durchschnittlich mindestens zwei aliphatisch ungesättigte Reste **R**^{**2**} enthalten sind und dass die bei 25°C bestimmte Viskosität der Diorganopolysiloxane (A) 1 mPa.s bis 40 000 Pa.s beträgt,
(B) Organohydrogenpolysiloxane der allgemeinen Formel (2)

   R³ _{c}R⁴ _{d}R⁵ ₑH_{f}SiO_{(4-c-d-2e-f)/2} (2),

   wobei
   - **R**^{**3**}: einen monovalenten aliphatisch gesättigten Kohlenwasserstoffrest mit 1 bis 20 Kohlenstoffatomen,
   - **R**^{**4**}(a): einen gegebenenfalls halogensubstituierten monovalenten Kohlenwasserstoffrest mit 6 bis 15 Kohlenstoffatomen, welcher mindestens einen aromatischen C₆-Ring enthält, oder (b) einen halogensubstituierten, gegebenenfalls O-, N-, S- oder P-Atome enthaltenden gesättigten monovalenten Kohlenwasserstoffrest mit 2 bis 20 Kohlenstoffatomen,
   - **R**^{**5**}: einen beidseitig Si-gebundenen bivalenten, gegebenenfalls halogensubstituierten, gegebenenfalls O-, N-, S- oder P-Atome enthaltenden Kohlenwasserstoffrest mit 6 bis 20 Kohlenstoffatomen bedeutet und
   - **c, d, e** und **f**: Null und positive Zahlen bedeuten, mit der Maßgabe, dass das Organohydrogenpolysiloxan (B) pro Molekül durchschnittlich mindestens 3 SiH-Gruppen aufweist, dass die Relation: 0,05<100 (d+e)/(c+d+e+f) erfüllt ist und dass die bei 25°C bestimmte Viskosität des Organohydrogenpolysiloxans (B) 1 mPa.s bis 100 Pa.s beträgt,
(C) Haftvermittler 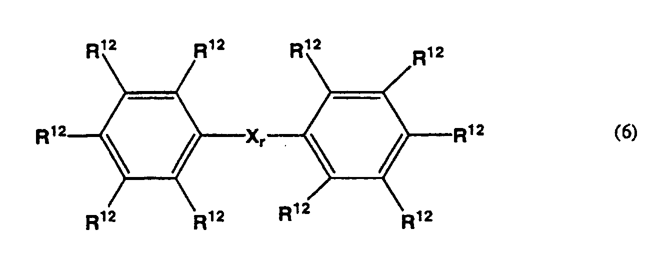 wobei R¹² ein Wasserstoffatom, eine Hydroxylgruppe, ein Halogenatom, eine Alkyl-, Alkenyl-, Alkoxy-, Alkenyloxy- oder Arylgruppe oder eine einwertige organische Gruppe ist, die eine Alkenyl-, Alkoxy-, Glycidyl-, Carbonyl-, Carbonyloxy-, Silyloxy- oder Alkoxysilylgruppe enthält, wobei zumindest einer der Reste R¹² (eine) Alkenylgruppe(n) oder (eine) Alkenylgruppe enthaltende, einwertige, organische Gruppe ist,
   und X ist aus den folgenden Gruppen ausgewählt wird:
   -(R¹³-)C(-R¹³)-, -(O=)S-(=O),-(O=)S-, -C(=O)-,
   -O-(CH₃-)Si(-CH₃)-O-, -(CH₂)ₛ- und -O-
   worin R¹³ für ein Wasserstoffatom, ein Halogenatom oder eine substituierte oder unsubstituierte Alkyl-, Aryl-,.Alkenyl- oder Alkinylgruppe steht und s eine positive Zahl von zumindest 2, vorzugsweise 2 bis 4, ist und r 0 oder 1 bedeutet und
(D) Hydrosilylierungskatalysator enthalten.

Organohydrogenpolysiloxan (B) fungiert als Haftvermittler und zugleich als Vernetzer.

Die Komponente (C) ist eine Verbindung mit zumindest einer aliphatischen ungesättigten Gruppe und zwei Phenylskeletten pro Molekül. Diese Verbindung ist eine wesentliche Klebrigmacher-Komponente, die mit Komponente (A) und (B) so zusammenwirkt, dass die Zusammensetzung klebrig wird. Die Verbindungen weisen aliphatische ungesättigte Gruppen, wie z.B. Alkenylgruppen, und p-Phenylen-Skelette auf und entsprechen der folgenden allgemeinen Formel (6), vorzugsweise der folgenden allgemeinen Formel (7).

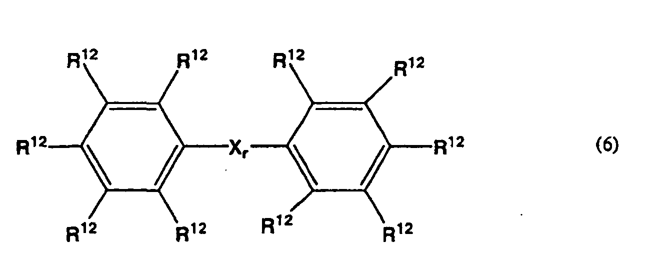

In Formel (6) ist R¹² ein Wasserstoffatom, eine Hydroxylgruppe, ein Halogenatom, eine Alkyl-, Alkenyl-, Alkoxy-, Alkenyloxy- oder Arylgruppe oder eine einwertige organische Gruppe, die eine Alkenyl-, Alkoxy-, Glycidyl-, Carbonyl-, Carbonyloxy-, Silyloxy- oder Alkoxysilylgruppe enthält. Zumindest einer, vorzugsweise 1 bis 4, der Reste R¹² ist/sind (eine) Alkenylgruppe(n) oder (eine) Alkenylgruppe enthaltende, einwertige, organische Gruppe.

X ist aus den folgenden Gruppen ausgewählt:
-(R¹³-)C(-R¹³)-, -(O=)S(=O)-, -(O=)S-, -C(=O)-,
-O-(CH₃-)Si(-CH₃)-O-, -(CH₂)ₛ- und -O-
worin R¹³ für ein Wasserstoffatom, ein Halogenatom oder eine substituierte oder unsubstituierte Alkyl-, Aryl-, Alkenyl- oder Alkinylgruppe steht und s eine positive Zahl von zumindest 2, vorzugsweise 2 bis 4, ist. Der Buchstabe r bedeutet 0 oder 1.

In R¹² und R¹³ sollten die Alkyl- und Alkoxygruppen vorzugsweise 1 bis 10 Kohlenstoffatome, noch bevorzugter 1 bis 8 Kohlenstoffatome, insbesondere 1 bis 6 Kohlenstoffatome, aufweisen. Die Arylgruppe sollte vorzugsweise 6 bis 10 Kohlenstoffatome, bevorzugt 6 bis 8 Kohlenstoffatome, aufweisen. Die Alkenyl-, Alkinyl- und Alkenyloxy-Gruppen sollten vorzugsweise 2 bis 10 Kohlenstoffatome, bevorzugt 2 bis 8 Kohlenstoffatome, insbesondere 2 bis 6 Kohlenstoffatome, aufweisen. Die einwertige organische Gruppe sollte vorzugsweise 1 bis 12 Kohlenstoffatome, bevorzugt 2 bis 10 Kohlenstoffatome, insbesondere 2 bis 8 Kohlenstoffatome, aufweisen.

Beispiele für die Alkyl-, Alkenyl- und Arylgruppen sind für Alkylgruppen Methyl, Ethyl, Propyl, Isopropyl, Butyl, tert-Butyl, Hexyl, Cyclohexyl und Octyl, für Alkenylgruppen Vinyl, Allyl, Propenyl, Isopropenyl, Butenyl, Hexenyl, Cyclohexenyl, für Arylgruppen Phenyl, Tolyl, Xylyl, Aralkylgruppen, wie z.B. Benzyl und Phenylethyl. Beispiele für die Alkinylgruppe umfassen die Acetylengruppe. Beispiele für die Alkoxy- und die Alkenyloxygruppen umfassen Methoxy, Ethoxy, Propoxy, Isopropoxy, Butoxy, tert-Butoxy, Methoxyethoxy, Ethoxyethoxy, Vinyloxy, Allyloxy, Propenoxy, Isopropenoxy, Butenoxy usw.

Beispiele für die einwertige organische Gruppe, die eine Alkenyl-, Alkoxy-, Glycidyl-, Carbonyl-, Carbonyloxy-, Silyloxy- oder Alkoxysilyl-Gruppe enthält, umfassen die folgenden Gruppen:

CH₂=C(-R')-C(=O)-O-

worin R' ein Wasserstoffatom oder eine Methylgruppe darstellt,

(R"O)ₓSi(-R"₃₋ₓ)-(CH₂)_{y}-O-

worin R" eine einwertige Kohlenwasserstoff-Gruppe mit 1 bis 6 Kohlenstoffatomen, wie z.B. eine Alkylgruppe, eine Alkenylgruppe und eine Arylgruppe, darstellt, x = 1, 2 oder 3 ist und y eine ganze Zahl von 0 bis 6 ist, 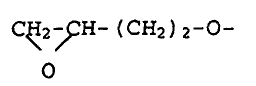 worin z eine ganze Zahl von 1 bis 6 ist, und 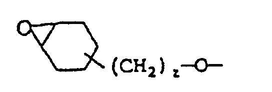 worin z eine ganze Zahl von 1 bis 6 ist.

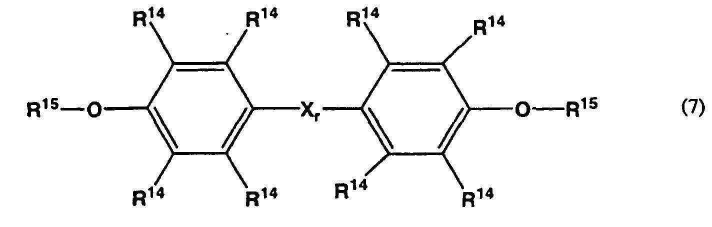

R¹⁴ in Formel (7) steht für Wasserstoffatome, Hydroxylgruppen, Halogenatome, Alkylgruppen mit 1 bis 10 Kohlenstoffatomen, vorzugsweise 1 bis 8 Kohlenstoffatomen, noch bevorzugter 1 bis 6 Kohlenstoffatomen, oder Alkenylgruppen mit 2 bis 10 Kohlenstoffatomen, vorzugsweise 2 bis 8 Kohlenstoffatomen, noch bevorzugter 2 bis 6 Kohlenstoffatomen. R¹⁵ steht für Alkenylgruppen mit 2 bis 12, vorzugsweise 2 bis 10, Kohlenstoffatomen, einwertige organische Gruppen, die eine Alkenylgruppe mit 2 bis 12, vorzugsweise 2 bis 10, Kohlenstoffatomen enthalten, -R¹⁶ₜ-SiR¹⁷ oder -CO-R¹⁷ . R¹⁶ ist eine Alkylengruppe mit 1 bis 6 Kohlenstoffatomen, vorzugsweise 1 bis 4 Kohlenstoffatomen. Der Buchstabe t = 0 oder 1. R¹⁷ ist eine Alkylgruppe mit 1 bis 6 Kohlenstoffatomen, eine Alkenylgruppe mit 2 bis 6 Kohlenstoffatomen oder eine Alkoxygruppe mit 1 bis 6 Kohlenstoffatomen Einer oder zwei der Reste R¹⁵ sollte(n) (eine) Alkenylgruppe(n) oder (eine) einwertige organische Gruppe(n) sein, die eine Alkenylgruppe enthält/enthalten.

X und r haben die oben angeführte Bedeutung.

Beispiele für die Alkyl-, Alkenyl- und die eine Alkenylgruppe enthaltende, einwertige organische Gruppe sind dieselben, wie für R¹² angegeben.

Beispiele für die Alkylengruppe umfassen die Methylen-, Ethylen-, Trimethylen-, Tetramethylen-, Hexamethylen- und die Methylethylen-Gruppe.

Nachstehend sind Beispiele für die Verbindung angeführt.

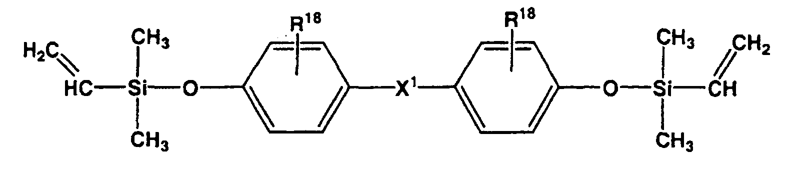

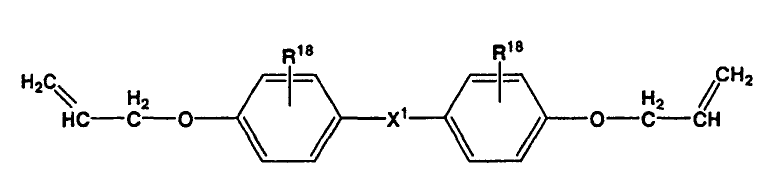

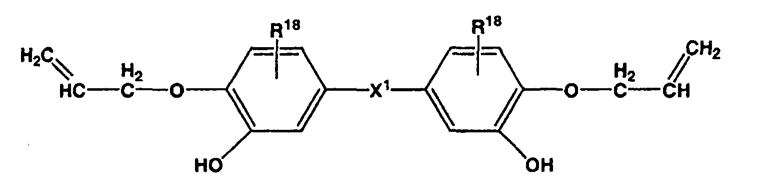

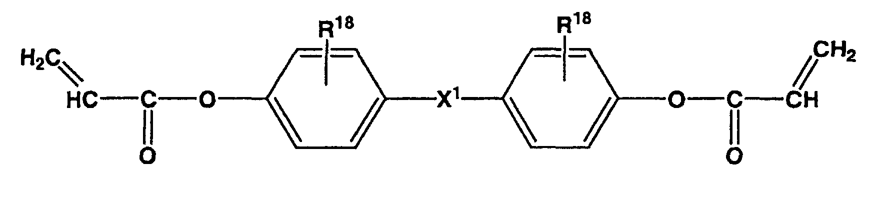

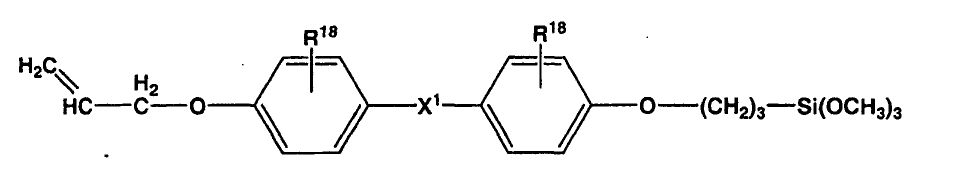

In den obigen Formeln ist X¹ = -O-, -CH₂-, -(CH₃-)C(-CH₃)-, -O-(CH₃-)Si(-CH₃)-O-,
und R ist ein Wasserstoffatom, eine Vinylgruppe oder eine Allylgruppe.

Die Komponenten (A), (B) und (C) können jeweils eine einzige Verbindung oder beliebige Mischungen verschiedener Verbindungen der jeweiligen Komponente enthalten.

Die Reste **R**^{**1**} sind beispielsweise Alkylreste, wie Methyl-, Ethyl-, Propyl-, Isopropyl-, tert.-Butyl-, n-Pentyl-, iso-Pentyl-, neo-Pentyl-, tert.-Pentyl-, n-Octyl-, 2-Ethylhexyl-, 2,2,4-Trimethylpentyl-, n-Nonyl- und Octadecylrest; Cycloalkylreste, wie Cyclopentyl-, Cyclohexyl-, Cycloheptyl-, Norbornyl-, Adamantylethyl- oder Bornylrest; Aryl- oder Alkarylreste, wie Phenyl-, Ethylphenyl-, Tolyl-, Xylyl-, Mesityl- oder Naphthylrest; Aralkylreste, wie Benzyl-, 2-Phenylpropyl- oder Phenylethylrest, sowie halogenierte und mit organischen Gruppen funktionalisierte Derivate der voranstehenden Reste, wie 3,3,3-Trifluorpropyl-, 3-Iodopropyl-, 3-Isocyanatopropyl-, Aminopropyl-, Methacryloxymethyl- oder Cyanoethylrest. Bevorzugte Reste **R**^{**1**} enthalten 1 bis 10 Kohlenstoffatome sowie gegebenenfalls Halogensubstituenten. Besonders bevorzugte Reste **R**^{**1**} sind Methyl-, Phenyl- und 3,3,3-Trifluorpropylrest, insbesondere der Methylrest.

Die Reste **R**^{**2**} sind einer Hydrosilylierungsreaktion zugänglich. Beispiele hierfür sind Alkenyl- und Alkinylreste, wie Vinyl-, Allyl-, Isopropenyl-, 3-Butenyl-, 2,4-Pentadienyl-, Butadienyl-, 5-Hexenyl-, Undecenyl-, Ethinyl-, Propinyl- und Hexinylrest; Cycloalkenylreste, wie Cyclopentenyl-, Cyclohexenyl-, 3-Cyclohexenylethyl-, 5-Bicycloheptenyl-, Norbornenyl-, 4-Cyclooctenyl- oder Cyclooctadienylrest; Alkenylarylreste, wie Styryl- oder Styrylethylrest, sowie halogenierte und Heteroatome enthaltende Derivate der voranstehenden Reste, wie 2-Bromvinyl-, 3-Brom-1-propinyl-, 1-Chlor-2-methylallyl-, 2-(Chlormethyl)allyl-, Styryloxy-, Allyloxypropyl-, 1-Methoxyvinyl-, Cyclopentenyloxy-, 3-Cyclohexenyloxy-, Acryloyl-, Acryloyloxy-, Methacryloyl- oder Methacryloyloxyrest. Bevorzugte Reste **R**^{**2**} sind Vinyl-, Allyl- und 5-Hexenylrest, insbesondere der Vinylrest.

Bei den Diorganopolysiloxanen (A) der allgemeinen Formel (1) beträgt die bei 25°C bestimmte Viskosität zwischen vorzugsweise 100 mPa.s bis 30 000 Pa.s. Besonders bevorzugt ist der Viskositätsbereich von 1 bis 30 000 Pa.s. Je nach Art der additionsvernetzenden Masse, werden unterschiedliche Viskositätsbereiche besonders bevorzugt. Für die als RTV-2 (room temperature vulcanizing) bekannten Massen werden Viskositäten von 100 bis 10 000 mPa.s besonders bevorzugt, für LSR (liquid silicone rubber) von 1 bis 100 Pa.s und für HTV (high temperature vulcanizing) von 2 000 bis 40 000 Pa.s.

Beispiele für **R**^{**3**} sind Alkylreste, wie Methyl-, Ethyl-, Propyl-, Isopropyl-, tert.-Butyl-, n-Octyl-, 2-Ethylhexyl- und Octadecylrest, sowie Cycloalkylreste, wie Cyclopentyl-, Cyclohexyl-, Norbornyl- oder Bornylrest. Bevorzugte Reste **R**^{**3**} sind Kohlenwasserstoffreste mit 1 bis 10 Kohlenstoffatomen Besonders bevorzugter Rest **R**^{**3**} ist der Methylrest.

Beispiele für **R**^{**4**} (a) sind der Phenyl-, Tolyl-, Xylyl-, Biphenylyl-, Anthryl-, Indenyl-, Phenanthryl-, Naphthyl-, Benzyl-, Phenylethyl- oder Phenylpropylrest, sowie halogenierte und mit organischen Gruppen funktionalisierte Derivate der voranstehenden Reste, wie o-, m-, p-Chlorphenyl-, Pentafluorphenyl-, Bromtolyl-, Trifluortolyl-, Phenoxy-, Benzyloxy-, Benzyloxyethyl-, Benzoyl-, Benzoyloxy-, p-tert.-Butylphenoxypropyl-, 4-Nitrophenyl-, Chinolinyl- oder Pentafluorbenzoyloxyrest. Beispiele für Kohlenwasserstoffreste **R**^{**4**} (b) mit 2 bis 20 Kohlenstoffatomen sind Reste, wie 3-Chlorpropyl-, 3-Brompropyl-, 3,3,3-Trifluorpropyl-, 2-Fluorethyl-, 1,1-Dihydroperfluordodecyl- oder der 2-Cyanoethylrest. Besonders bevorzugte Reste **R**^{**4**} sind der Phenylrest und der 3,3,3-Trifluorpropylrest.

Bevorzugte Reste **R**^{**5**}, entsprechen der allgemeinen Formel (4)

-(O)ₛ-(R⁶)ₜ-(O)ᵤ-(X)_{w}-(O)ᵤ-(R⁶)ₜ-(O)ₛ-, (4),

wobei
- **s, t, u** und **w**: unabhängig voneinander die Werte 0, 1 oder 2,
- **R**^{**6**}: gleich oder verschieden sein können und einen bivalenten, gegebenenfalls halogensubstituierten, gegebenenfalls O-, N-, S- oder P-Atome enthaltenden Kohlenwasserstoffrest, der frei ist von aliphatisch ungesättigten Gruppen und 1 bis 10 Kohlenstoffatome enthält, wie -CH₂-, -CH₂-CH₂-, -CH₂-CH₂-CH₂-, -CF₂-, -CH₂-CF₂-, -CH₂-CH(CH₃)-, -C(CH₃)₂-, -CH₂-C(CH₃)₂-, -C(CH₃)₂-CH₂-, -CH₂-CH₂-O- oder -CF₂-CF₂-O-,
- **-(X)-**: einen bivalenten Rest, wie -Ph-, -Ph-O-Ph-, -Ph-S-Ph-, -Ph-SO₂-Ph-, -Ph-CH₂-Ph-, -Ph-C(CH₃)₂-Ph-, -Ph-C(CF₃)₂-Ph-, -Ph-C(O)-Ph-, Cyclohexylen oder Norbornylen, wobei -Ph- eine Phenylengruppe bezeichnet, bedeuten.

Besonders bevorzugter Rest **R**^{**5**} ist der Phenylenrest.

Das Organohydrogenpolysiloxan (B) enthält pro Molekül vorzugsweise 5 bis 40 SiH-Gruppen. Die bei 25°C gemessene Viskosität des Bestandteils (B) beträgt vorzugsweise 2 mPa.s bis 1 Pa.s.

Aufgrund der Labilität der SiH-Gruppe kann der Bestandteil (B) herstellungsbedingt einen geringen Gehalt, typischerweise <100 Gew.-ppm, Si-gebundener OH-Gruppen aufweisen.

Auf 100 Gew.-Teile Diorganopolysiloxane (A) werden vorzugsweise 0,1 bis 50 Gew.-Teile, insbesondere 0,5 bis 10 Gew.-Teile Organohydrogenpolysiloxane (B) und 0,1 bis 15 Gew.-Teile, insbesondere 0,5 bis 7 Gew.-Teile (C) eingesetzt.

Hydrosilylierungskatalysator (D) dient als Katalysator für die als Hydrosilylierung bezeichnete Additionsreaktion zwischen den aliphatisch ungesättigten Kohlenwasserstoffresten **R**^{**2**} der Diorganopolysiloxane (A) und den siliciumgebundenen Wasserstoffatomen der Organohydrogenpolysiloxane (B). In der Literatur sind zahlreiche geeignete Hydrosilylierungskatalysatoren beschrieben. Prinzipiell können alle dem Stand der Technik entsprechenden und in additionsvernetzenden Siliconkautschukmassen eingesetzten Hydrosilylierungskatalysatoren verwendet werden.

Als Hydrosilylierungskatalysator (D) können Metalle und deren Verbindungen, wie Platin, Rhodium, Palladium, Ruthenium und Iridium, vorzugsweise Platin, eingesetzt werden. Die Metalle können gegebenenfalls auf feinteiligen Trägermaterialien, wie Aktivkohle, Metalloxiden, wie Aluminiumoxid oder Siliciumdioxid, fixiert sein.
Vorzugsweise werden Platin und Platinverbindungen verwendet. Besonders bevorzugt werden solche Platinverbindungen, die in Polyorganosiloxanen löslich sind, verwendet. Als lösliche Platinverbindungen können beispielsweise die Platin-Olefin-Komplexe der Formeln (PtCl₂.Olefin) ₂ und H(PtCl₃.Olefin) verwendet werden, wobei bevorzugt Alkene mit 2 bis 8 Kohlenstoffatomen, wie Ethylen, Propylen, Isomere des Butens und Octens, oder Cycloalkene mit 5 bis 7 Kohlenstoffatomen, wie Cyclopenten, Cyclohexen und Cyclohepten, eingesetzt werden. Weitere lösliche Platin-Katalysatoren sind der Platin-Cyclopropan-Komplex der Formel (PtCl₂C₃H₆)₂, die Umsetzungsprodukte von Hexachloroplatinsäure mit Alkoholen, Ethern und Aldehyden bzw. Mischungen derselben oder das Umsetzungsprodukt von Hexachloroplatinsäure mit Methylvinylcyclotetrasiloxan in Gegenwart von Natriumbicarbonat in ethanolischer Lösung. Auch Platin-Katalysatoren mit Phosphor-, Schwefel- und Aminliganden können verwendet werden, z.B. (Ph₃P)₂PtCl₂. Besonders bevorzugt sind Komplexe des Platins mit Vinylsiloxanen, wie sym-Divinyltetramethyldisiloxan.

Die Menge des eingesetzten Hydrosilylierungskatalysators (D) richtet sich nach der gewünschten Vernetzungsgeschwindigkeit sowie ökonomischen Gesichtpunkten. Üblicherweise werden pro 100 Gew.-Teile Diorganopolysiloxane (A) vorzugsweise 1 x 10⁻⁵ bis 5 x 10⁻³ Gew.-Teile, insbesondere 1 x 10⁻⁴ bis 1 x 10⁻² Gew.-Teile Platin-Katalysatoren, berechnet als Platin-Metall eingesetzt.

Die selbsthaftenden additionsvernetzenden Siliconzusammensetzungen können gegebenenfalls weitere Bestandteile (E) wie Füllstoffe, Inhibitoren, Stabilisatoren, Pigmente und Katalysatoren enthalten.

Um eine ausreichend hohe mechanische Festigkeit des vernetzten Siliconkautschuks zu erzielen, ist es bevorzugt, aktiv verstärkende Füllstoffe als Bestandteil (F) in die additionsvernetzenden Siliconzusammensetzungen einzuarbeiten. Als aktiv verstärkende Füllstoffe (F) werden vor allem gefällte und pyrogene Kieselsäuren sowie Gemische derselben verwendet. Die spezifische Oberfläche dieser aktiv verstärkenden Füllstoffe sollte mindestens 50 m²/g betragen oder vorzugsweise im Bereich von 100 bis 400 m²/g gemäß der Bestimmung nach der BET-Methode liegen. Derartige aktiv verstärkende Füllstoffe sind auf dem Gebiet der Siliconkautschuke sehr gut bekannte Materialien. Die genannten Kieselsäurefüllstoffe können hydrophilen Charakter haben oder nach bekannten Verfahren hydrophobiert sein. Beim Einmischen hydrophiler Füllstoffe ist die Zugabe eines Hydrophobierungsmittels erforderlich.
Der Gehalt der erfindungsgemäßen vernetzbaren Masse an aktiv verstärkendem Füllstoff (F) liegt im Bereich von 0 bis 70 Gew.-%, vorzugsweise bei 0 bis 50 Gew.-%.

Die erfindungsgemäße Siliconkautschukmasse kann wahlweise als Bestandteil (G) weitere Zusätze zu einem Anteil von bis zu 70 Gew.-%, vorzugsweise 0,0001 bis 40 Gew.-%, enthalten. Diese Zusätze können z.B. inaktive Füllstoffe, harzartige Polyorganosiloxane, Dispergierhilfsmittel, Lösungsmittel, Haftvermittler, Pigmente, Farbstoffe, Weichmacher, organische Polymere, Hitzestabilisatoren usw. sein. Hierzu zählen Zusätze, wie Aktivkohle, Quarzmehl, Diatomeenerde, Tone, Kreide, Lithopone, Ruße, Graphit, Metalloxide, Metallcarbonate, -sulfate, Metallsalze von Carbonsäuren, Metallstäube, Fasern, wie Glasfasern, Kunststoffasern, Kunststoffpulver, Farbstoffe, Pigmente usw.

Enthalten sein können des weiteren Zusätze (H), die der gezielten Einstellung der Verarbeitungszeit, Anspringtemperatur und Vernetzungsgeschwindigkeit der erfindungsgemäßen Massen dienen. Diese Inhibitoren und Stabilisatoren sind auf dem Gebiet der additionsvernetzenden Massen sehr gut bekannt. Beispiele gebräuchlicher Inhibitoren sind acetylenische Alkohole, wie 1-Ethinyl-1-cyclohexanol, 2-Methyl-3-butin-2-ol und 3,5-Dimethyl-1-hexin-3-ol, 3-Methyl-1-dodecin-3-ol, Polymethylvinylcyclosiloxane, wie 1,3,5,7-Tetravinyltetramethyltetracyclosiloxan, niedermolekulare Siliconöle mit MethylvinylSiO_{2/2}-Gruppen und/oder R₂vinylSiO_{1/2}-Endgruppen, wie Divinyltetramethyldisiloxan, Tetravinyldimethyldisiloxan, Trialkylcyanurate, Alkylmaleate, wie Diallylmaleat, Dimethylmaleat und Diethylmaleat, Alkylfumarate, wie Diallylfumarat und Diethylfumarat, organische Hydroperoxide, wie Cumolhydroperoxid, tert.-Butylhydroperoxid und Pinanhydroperoxid, organische Peroxide, organische Sulfoxide, organische Amine, Diamine und Amide, Phosphane und Phosphite, Nitrile, Triazole, Diaziridine und Oxime. Die Wirkung dieser Inhibitorzusätze (H) hängt von ihrer chemischen Struktur ab, so daß sie individuell bestimmt werden muß.

Der Inhibitorgehalt der erfindungsgemäßen Massen beträgt vorzugsweise 0 bis 50 000 ppm, besonders bevorzugt 20 bis 2000 ppm, insbesondere 100 bis 1000 ppm.

Optional können weitere Bestandteile (I), die in herkömmlichen selbsthaftenden additionsvernetzenden Sliconkautschukmassen eingesetzt werden, zugesetzt werden. Vorzugsweise handelt es sich hierbei um Organopolysiloxan-Verbindungen. Noch bevorzugter sind cyclische oder lineare Organopolysiloxan-Verbindungen mit mindestens einer SiH-Gruppe und mindestens einer Alkoxysilyl- und/oder Glycidylgruppe pro Molekül. Solche Verbindungen sind z.B. in US 5,312,855 beschrieben, insbesondere Spalte 4, Zeile 25 bis Spalte 5, Zeile 23 (Adhesion Imparting Agent (D)). Des weiteren bevorzugt sind Epoxygruppen und hydrolysierbare Gruppen aufweisende Organosiliciumverbindungen der allgemeinen Formel (3)

R⁷ _{g}R⁸ ₕR⁹ ᵢSiO_{(4-g-h-i)/2} (3),

und/oder deren Teilhydrolysate, wobei
- **R**^{**7**}: einen Wasserstoff-, Hydroxyl- oder einen gegebenenfalls halogen- oder cyanosubstituierten, gegebenenfalls O-, N-, S- oder P-Atome enthaltenden gesättigten monovalenten Kohlenwasserstoffrest mit 1 bis 20 Kohlenstoffatomen,
- **R**^{**8**}: einen mindestens eine Epoxygruppe, gegebenenfalls halogen-substituierte, gegebenenfalls O-, N-, S- oder P-Atome enthaltenden monovalenten Kohlenwasserstoffrest mit 2 bis 20 Kohlenstoffatomen,
- R⁹: einen über eine Si-O-C-, Si-O-N- oder Si-N-Verknüpfung an Si gebundenen hydrolysierbaren monovalenten gegebenenfalls halogensubstituierten, gegebenenfalls O-, N-, S- oder P- Atome enthaltenden Kohlenwasserstoffrest mit 1 bis 20 Kohlenstoffatomen,
mit der Maßgabe, dass gilt, 4>**g**≥0, 4>**h**>0, 4>**i**>0, 4≥(**h+i**)>0 und 4≥(**g**+**h**+**i**).

Beispiele für Kohlenwasserstoffreste **R**^{**7**} sind Alkylreste, wie Methyl-, Ethyl-, n-Propyl-, Isopropyl-, tert.-Butyl-, n-Pentyl-, iso-Pentyl-, neo-Pentyl-, tert.-Pentyl-, n-Octyl-, 2-Ethylhexyl-, 2,2,4-Trimethylpentyl-, n-Nonyl- und Octadecylrest; Cycloalkylreste, wie Cyclopentyl-, Cyclohexyl-, Cycloheptyl-, Norbornyl-, Adamantylethyl- oder Bornylrest; Arylreste, wie Phenyl-, Ethylphenyl-, Tolyl-, Xylyl-, Mesityl- oder Naphthylrest; Aralkylreste, wie Benzyl-, Phenylethyl- oder Phenylpropylrest; Alkenyl- oder Alkinylreste, wie Vinyl-, Allyl-, Isopropenyl-, 3-Butenyl-, 2,4-Pentadienyl-, Butadienyl-, 5-Hexenyl-, Undecenyl-, Ethinyl-, Propinyl- und Hexinylrest; Cycloalkenylreste, wie Cyclopentenyl-, Cyclohexenyl-, 3-Cyclohexenylethyl-, 5-Bicycloheptenyl-, Norbornenyl-, 4-Cyclooctenyl- oder Cyclooctadienylrest; Aralkenylreste, wie Phenylethenyl- und Phenylethinyl-; sowie halogensubstituierte oder Heteroatome enthaltende Derivate der voranstehenden Reste, wie 3-Chlorpropyl-, 3-Brompropyl-, Decafluoro-1,1,2,2-tetrahydrooctyl-, (p-Chlormethyl)phenyl-, (p-Chlormethyl)phenethyl-, Hydroxymethyl-, Hydroxyethyl-, Hydroxypropyl-, Hydroxybutyl, 2-Bromvinyl-, 2-Allyloxymethyl-, Acetyl-, Acetoxymethyl-, Acetoxyethyl-, Acetoxypropyl-, 3-Phenoxypropyl-, Benzoyloxypropyl-, Mercaptopropyl-, Cyanoethyl-, Cyanopropyl-, 3-Cyanobutyl-, 3-Isocyanatopropyl-, 2-(Carbomethoxy)ethyl-, 10-(Carbomethoxy)decyl-, 2-(Carboxymethylthio)ethyl-, 3-Carboxypropyl-, Aminomethyl-, Aminoethyl-, Aminopropyl-, Aminohexyl-, Aminoethylaminopropyl-, 3-(N-Allylamino)propyl-, (Aminoethylaminomethyl)phenethyl-, m-Aminophenyl-, 3-(m-Aminophenoxy)propyl-, 3-Acryloxypropyl-, 3-Acryloxy-2-hydroxypropyl-, 4-(Acryloxymethyl)phenethyl-, Methacryloxymethyl-, Methacryloxyethyl- oder Methacryloxypropylrest. Bevorzugte Reste **R**^{**7**} sind Methyl-, Ethyl-, Propyl-, Butyl-, Octyl-, Vinyl-, Allyl-, Phenyl-, 3,3,3-Trifluorpropyl- und Cyanopropylrest. Besonders bevorzugte Reste **R**^{**7**} sind Methyl-, Vinyl- und Phenylrest.

Beispiele für die Reste **R**^{**8**} sind Epoxyethyl-, 2,3-Epoxypropyl-, 3,4-Epoxybutyl-, 5,6-Epoxyhexyl-, 9,10-Epoxydecyl-, Glycidyloxy-, 3-Glycidyloxypropyl-, Glycidyloxyisobutyl-, 2-Methylglycidyloxypropyl-, 3-Phenylglycidyloxypropyl-, Glycidyloxyphenylnonyl-, Glycidyloxybenzylethyl-, 3,4-Epoxycyclohexyl-, 2-(3,4-Epoxycyclohexyl)ethyl-, 3-(3,4-Epoxycyclohexyl)propyl-, 1, 4-Epoxycyclohexyl- oder 2-(1,4-Epoxycyclohexyl)ethylrest. Bevorzugte Reste **R**^{**8**} sind 3,4-Epoxycyclohexyl-, 3-(3,4-Epoxycyclohexyl)propyl- und Glycidoxypropylrest. Vorzugsweise weist Rest **R**^{**8**} 2 bis 10 Kohlenstoffatome auf. Der besonders bevorzugte Rest **R**^{**8**} ist der Glycidoxypropylrest.
- **R**^{**9**}: einen über eine Si-O-C-, Si-O-N- oder Si-N-Verknüpfung an Si gebundenen hydrolysierbaren monovalenten gegebenenfalls halogensubstituierten, gegebenenfalls O-, N-, S- oder P- Atome enthaltenden Kohlenwasserstoffrest mit 1 bis 20 Kohlenstoffatomen bedeutet.

Beispiele für die Reste **R**^{**9**} sind
a) Alkoxy-, Enoxy- oder Aryloxygruppen der allgemeinen Formel -OR¹⁰, wie Methoxy-, Ethoxy-, n-Propoxy-, iso-Propoxy-, n-Butoxy-, sec-Butoxy-, tert-Butoxy-, 2-Ethylbutoxy-, 2-Ethylhexoxy-, Vinyloxy-, Allyloxy-, Isopropenyloxy-, Cyclobutenyloxy-, Cyclohexenyloxy-, 1,3-Butadienyloxy-, Propargyloxy-, Phenoxy-, Benzyloxy- oder m,p-Vinylbenzyloxyrest;
b) Acyloxygruppen der allgemeinen Formel -OCOR¹⁰, wie Formyloxy-, Acetoxy-, 2-Ethylhexanoxy-, Acryloxy-, Methacryloxy-, Benzoyloxy- oder Norbornylacetoxyrest;
c) Aminogruppen der allgemeinen Formel -NH₂, -NHR¹⁰ oder -NR¹⁰₂, wie Dimethylamino-, Diisopropylamino-, Allylamino-, n-Butylamino-, sec-Butylamino- oder Cyclohexylaminorest;
d) Oximgruppen der allgemeinen Formel -ON=CH₂, -ON=CHR¹⁰ oder -ON=CR¹⁰₂, wie Methylethylketoxim-, Methylisobutylketoxim-, Methyl-n-amylketoxim- oder Dimethylketoximrest;
e) Amidgruppen der allgemeinen Formel -NH-C(=O)-R¹⁰ oder -NR¹⁰-C(=O)-R¹⁰, wie N-Methylbenzamido- oder N-Methylacetamidorest;
f) Aminoxygruppen der allgemeinen Formel -ONH₂, -ONHR¹⁰ oder -ONR¹⁰₂, wie Hydroxylaminorest; oder
g) Halogensubstituierte oder Heteroatome enthaltende oder komplexer zusammengesetzte Derivate der voranstehend genannten Reste, wie p-Aminophenoxy-, 2-Methoxyethoxy-, 1-Methoxy-2-propoxy-, 1-Methoxy-isopropenyloxy-, Methoxyethoxyethoxy-, 1-Methoxy-2-methylpropenyloxy-, Acryloxymethoxy-, Methacryloxy(polyethylenoxy)-, Furyloxy-, N-Vinylformamidorest sowie -O-Ph-C(=O)-Ph, -O-C(CF₃)=CH-C(=O)-CF₃, -O-C(CH₃)=CH-C(=O)-CH₃, -O-C(CH₃)₂-CH=CH₂, -NH-C(=O)-CH₃, -O-C(=O)-CH₂Br, -O-C(=O)-CF₃, -O-C(=O) -C≡CH oder -O-CH₂-C(=O)-O-Si(CH₃)₃.

Der Bestandteil (I) wird vorzugsweise in Mengen von 0 bis 5 Gew.-% , bevorzugt 0 bis 1 Gew.-%, besonders bevorzugt 0 bis 0,5 Gew.-%, eingesetzt. Der Zusatz dieser Verbindungen kann eine weitere Verbesserung der Haftung an verschiedenen Metallen und organischen Kunststoffen, sowie eine Ausweitung der Palette an Materialien, auf welchen die erfindungsgemäße Zusammensetzung haftet, bewirken.

Bevorzugt sind erfindungsgemäße additionsvernetzende Siliconzusammensetzungen, wobei Teil 1 die Komponenten A und B sowie gegebenenfalls C und Teil 2 die Komponenten A und D und gegebenenfalls C enthält, wobei C in beiden Teilen gleichzeitig enthalten sein kann, aber zumindest in einem der Teile enthalten sein muss.
Die Compoundierung der selbsthaftenden additionsvernetzenden Siliconzusammensetzungen erfolgt durch Mischen der oben aufgeführten Komponenten in beliebiger Reihenfolge.
Die Vernetzung der selbsthaftenden additionsvernetzenden Siliconzusammensetzungen erfolgt vorzugsweise durch Erwärmen, vorzugsweise bei 30 bis 250°C, bevorzugt bei mindestens 50°C, insbesondere bei mindestens 100°C, bevorzugt bei höchstens 200°C, insbesondere bei höchstens 180°C.

Gegenstand der Erfindung sind weiter die additionsvernetzten Siliconelastomere auf der Grundlage der erfindungsgemäßen Zusammensetzung enthaltend die Komponenten A, B, C und D.

Gegenstand der Erfindung ist weiter ein Verfahren zur Herstellung der additionsvernetzten Siliconelastomere, wobei die Komponenten A, B, C und D vermischt werden.

Gegenstand der Erfindung ist weiter ein Verfahren zum Verbinden der additionsvernetzenden Siliconzusammensetzung, wobei die Zusammensetzung auf ein Substrat aufgebracht und erwärmt wird.

Die additionsvernetzenden Siliconzusammensetzungen können mit einem Substrat verbunden werden, indem die Siliconzusammensetzungen auf das Substrat aufgebracht und anschließend vorzugsweise durch Erwärmen auf 30 bis 250°C zu einem Verbundmaterial vernetzt werden.
Die selbsthaftenden additionsvernetzenden Siliconzusammensetzungen können insbesondere überall dort mit Vorteil eingesetzt werden, wo eine gute Haftfestigkeit zwischen dem additionsvernetzten Siliconelastomer und einem Substrat, vorzugsweise bestehend aus organischen Kunststoffen, Metallen oder Gläsern, erwünscht wird. Das Substrat kann als Formteil, Folie oder Beschichtung vorliegen.

Die selbsthaftenden additionsvernetzenden Siliconzusammensetzungen eignen sich zur Herstellung von Verbundmaterial durch Beschichten, Verkleben, Vergießen und zur Herstellung von Formartikeln.
Insbesondere eignen sich die selbsthaftenden additionsvernetzenden Siliconzusammensetzungen zum Verguß und zum Verkleben elektrischer und elektronischer Teile sowie zur Herstellung von Verbundformteilen. Unter Verbundformteilen wird hier ein einheitlicher Formartikel aus einem Verbundmaterial verstanden, der aus einem aus den Siliconzusammensetzungen hergestellten Siliconelastomerteil und mindestens einem Substrat so zusammengesetzt ist, dass zwischen beiden Teilen eine feste, dauerhafte Verbindung besteht. Vorzugsweise erfolgt die Herstellung eines solchen Verbundformteiles, indem ein organischer Kunststoff zu einem Formartikel verarbeitet wird und anschließend die Siliconzusammensetzungen mit diesem Formteil in Verbindung gebracht und vernetzt werden, was z.B. im Spritzgußverfahren, mittels Extrusion oder im sog. press-moulding-Verfahren erfolgen kann. Verbundmaterialien und insbesondere Verbundformteile können in vielfältigsten Anwendungsbereichen zum Einsatz kommen, z.B. in der Elektronik- Haushaltgeräte-, Gebrauchsgüter-, Bau- und Automobilindustrie, in der Medizintechnik, der Sport- und Freizeitartikelherstellung etc.

Die hervorragende Haftung bei den selbsthaftenden additionsvernetzenden Siliconzusammensetzungen entsteht durch das Zusammenwirken der drei essentiellen Bestandteile (A), (B) (Organohydrogenpolysiloxan) und (C) (Haftvermittler).

In den nachfolgenden Beispielen sind, falls jeweils nicht anders angegeben,
a) alle Drücke bei Normaldruck;
b) alle Temperaturen 20° C;
c) alle Teile als Gewichtsteile.

### Beispiele:

### Grundmasse 1:(GM 1)

In einem Laborkneter wurden 255 Teile eines Vinyldimethylsiloxy-terminierten Polydimethylsiloxans mit einer Viskosität von 20 Pa·s vorgelegt, auf 150°C aufgeheizt und mit 180 Teilen einer hydrophoben pyrogenen Kieselsäure mit einer spezifischen Oberfläche nach BET von 300 m²/g und einem Kohlenstoffgehalt von 3,95 Gew.-% versetzt. Es entstand eine hochviskose Masse, die anschließend mit 165 Masseteile des obengenannten Polydimethylsiloxans verdünnt wurde. Durch Kneten unter Vakuum (10 mbar) bei 150°C wurden während einer Stunde flüchtige Bestandteile entfernt.
100 Teile dieser Mischung wurden auf der Walze bei einer Termperatur von 25°C mit 0,05 Teilen eines Inhibitors (zur Verlängerung der Härtungszeit bei Raumtemperatur) und 10 ppm Platin (als Platin-Divinyltetramethyldisiloxan-Komplex in Vinylterminiertein Polydimethylsiloxan; erhältlich bei ABCR GmbH & Co, Deutschland) zu einer homogenen Masse vermischt, wobei der Inhibitor 1-Ethinyl-l-cyclohexanol war.

### Grundmasse 2: (GM 2)

Die Herstellung erfolgte analog Grundmasse 1, nur dass anstelle des o. g. Platin-Katalysators 10 ppm Platin als (COD)Pt(p-C=C-C₆H₅)₂ eingesetzt wurden.

### Grundmasse 3: (GM 3)

589,4 Teile eines Vinyldimethylsiloxy-terminierten Polydimethylsiloxans mit einer Brabender-Plastizität von 630 mkp entsprechend einer mittleren Molmasse von ca. 500000 g/mol wurden mit 252,6 Teilen einer hydrophoben pyrogenen Kieselsäure mit einer Oberfläche nach BET von 300 m²/g und einem Kohlenstoffgehalt von 3,95 Gew.-%, die in Portionen zudosiert wurde, 4 Stunden in einem Kneter zu einer homogenen Masse vermischt. 500 g der so erhaltenen Grundmasse wurden auf einer Walze bei einer Temperatur von 20°C mit 0,15 Teilen Inhibitor und 5 ppm Platin (als Platin-Divinyltetramethyldisiloxan-Komplex in Vinyl-terminiertem Polydimethylsiloxan; erhältlich bei ABCR GmbH & Co, Deutschland) zu einer homogenen Masse vermischt, wobei als Inhibitor 1-Ethinyl-1-cyclohexanol eingesetzt wurde.

### Polyorganohydrogensiloxan 1: (V 1)

In einem Rührwerk werden 5,0 kg eines Trimethylsiloxy-endständigen Polymethylhydrogensiloxanes, Me₃Si-(-O-SiH(Me))ₙ-O-SiMe₃, das gemäß ²⁹Si-NMR eine zahlenmittlere Kettenlänge von n=53 besitzt, und 5,0 kg eines Trimethylsiloxy-endständigen Siloxan-Copolymers, bestehend aus Dimethylsiloxy- und Methylphenylsiloxy-Einheiten im Molverhältnis 15,2 : 21,8 und einer bei 25°C gemessenen Viskosität von 100 mPa.s , vorgelegt. Unter fortwährendem Rühren werden bei Raumtemperatur 1,8 g Phosphornitrilchlorid, hergestellt nach US-A-4,203,913, zugegeben. Nach Anlegen eines Vakuums von <20 mbar wird 5 min gerührt und anschließend das Vakuum mit N₂ gebrochen. Anschließend wird 2 h bei einer Temperatur von 100°C gerührt. Man gibt 14 g Hexamethyldisilazan zu und rührt weitere 15 min. Abschließend wird ein Vakuum von <10 mbar angelegt, die Mischung unter fortwährendem Rühren 1 h bei 100°C von flüchtigen Bestandteilen befreit, das Vakuum mit N₂ gebrochen, auf Raumtemperatur abgekühlt und das Reaktionsprodukt filtriert. Man erhält ein Trimethylsiloxy-endständiges Polyorganohydrogensiloxan, das aus -O-Si(Me)₂-, -O-SiH(Me)- und -O-Si(Me)Ph- Einheiten im Molverhältnis 15,2 : 63,0 : 21,8 zusammengesetzt ist, und bei 25°C eine Viskosität von 32,1 mm²/s aufweist. Das Produkt enthält durchschnittlich 17 Si-H-Gruppen je Molekül.

### Polyorganohydrogensiloxan 2: (V 2)

5,0 Teile Poly[(dimethylsiloxy)-bis-(dimethylsiloxy)-ethylnorbornan] wurden in 100 Teilen Toluol gelöst und auf 80°C erhitzt. Nach Zugabe von 0,27 Teilen einer 10 gew.-%igen toluolischen PNCl₂-Lösung wurden 8,0 Teile Polymethylhydrogensiloxan und 4,0 Teile 1,3,5,7-Tetramethylcyclotetrasiloxan (beide kommerziell erhältlich bei ABCR GmbH) zugetropft. Nach dem Entfernen leicht flüchtiger Bestandteile wurde eine farblose Flüssigkeit erhalten, die entsprechend ihrer ¹H-NMR-, ²⁹Si-NMR- und IR-Spektren folgende mittlere Zusammensetzung aufwies, was einem H-Gehalt (Si-gebundener Wasserstoff) von 0,984 Gew.-% entsprach.

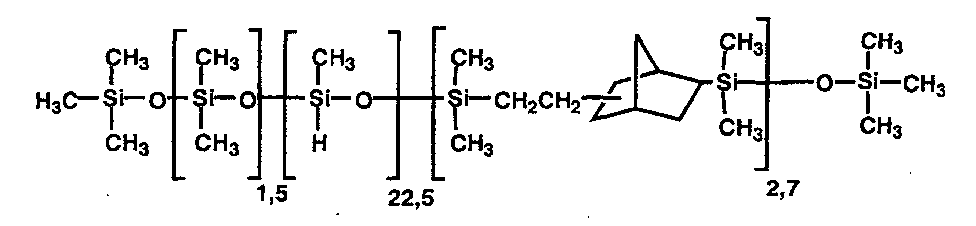

### Polyorganohydrogensiloxan 3: (V 3)

20,0 Teile Dimethylsiloxan-Silphenylen Copolymer und 210 Teile Toluol (getrocknet) wurden auf 80°C erhitzt. Nach der Zugabe von 0,35 Teilen einer 10 gew.-%igen toluolischen PNCl₂-Lösung wurden innerhalb von 30 min 25 Teile Polymethylhydrogensiloxan (von Aldrich GmbH) und 15,0 Teile Tetramethylcyclotetrasiloxan zugetropft. Die Reaktionsmischung wurde 1 Stunde bei 80°C gerührt und nach der Zugabe von nochmals 0,35 Teilen einer 10 gew.-%igen toluolischen PNCl₂-Lösung bei einer Temperatur von 100 °C nochmals eine Stunde gerührt. Nach dem Abkühlen wurden 2,0 Teile Hexamethyldisilazan (von Aldrich GmbH) zugegeben und 30 min gerührt. Nach Filtration wurden die niedrig siedenden Bestandteile im Vakuum entfernt. Es wurde ein farbloses Öl erhalten, welches gemäß der ¹H-NMR-, ²⁹Si-NMR- und IR-Spektren folgende mittlere Zusammensetzung aufwies: Trimethylsiloxy-endständiges Polyorganohydrogensiloxan, das aus -O-Si(Me)₂-, -O-SiH(Me)- und -O-Si(Me)₂-Ph-Si(Me)₂- Einheiten im Molverhältnis 14,1 : 77,9 : 8,0 zusammengesetzt ist und durchschnittlich 42 Si-H-Gruppen je Molekül enthält, was einem H-Gehalt (Si-gebundener Wasserstoff) von 1,02 Gew.-% entspricht.

### Polyorganohydrogensiloxan 4: (V 4 nicht erfindungsmäß)

Hierbei handelt es sich um ein Trimethylsiloxy-endständiges Polyorganohydrogensiloxan, welches durchschnittlich vier -O-SiH(Me)- Einheiten je Molekül enthält. Die Herstellung ist dem Fachmann sehr gut bekannt.

### Polyorganohydrogensiloxan 5: (V 5 nicht erfindungsmäß)

Hierbei handelt es sich um ein Trimethylsiloxy-endständiges Polyorganohydrogensiloxan, welches durchschnittlich acht -O-Si(Me)₂-und fünf -O-SiH(Me)- Gruppen enthält. Die Herstellung solcher Moleküle ist dem Fachmann sehr wohl vertraut.

### Haftvermittler 1: (H 1)

Es handelt sich um 2,2-Bis(4-allyloxyphenyl)propan. Die Herstellung der Verbindung ist bereits bekannt. (Sorrell, T.N., Yuan, H., *J. Org. Chem.* **62**, (1997) 1899-1902).

### Haftvermittler 2: (H 2)

Es handelt sich hierbei um 2,2-Bis(3-allyl-4-hydroxyphenyl)propan. Die Verbindung wurden von Aldrich GmbH bezogen.

### Haftvermittler 3: (H 3)

Es handelt sich hierbei um 4,4'-Dimethylacryloxydiphenylmethan. Die Verbindung wurde nach Ergozhin et al., *Izv. Akad. Nauk SSSR Ser. Khim.* **24** (1975) 1851 hergestellt.

### Beispiele:

X Teile Grundmasse (GM) wurde mit y Teilen Polyorganohydrogensiloxan (V) und z Teilen Haftvermittler (H) homogen vermischt anschließend unter Vakuum bei Raumtemperatur entgast. X, y und z sind in Tabelle 1 aufgelistet.

**Tabelle 1**

| | GM 1 | GM 2 | GM 3 | V 1 | V 2 | V 3 | V 4 | V 5 | H 1 | H 2 | H 3 |
|---|---|---|---|---|---|---|---|---|---|---|---|
| Beispiel 1 | 100 | | | 3,0 | | | | | 2,0 | | |
| Beispiel 2 | | 100 | | | 2,7 | | | | | 2,0 | |
| Beispiel 3 | | | 100 | | | 2,6 | | | | | 2,0 |
| Vergleichsbeispiel 4 | 100 | | | | | | 2,4 | | 2,0 | | |
| Vergleichsbeispiel 5 | | 100 | | | | | | 5,3 | | 2,0 | |
| Vergleichsbeispiel 6 | 100 | | | 3,0 | | | | | | | |

Die erhaltenen Siliconkautschukmischungen wurden Haftungstests unterworfen.

### Charakterisierung der Haftung (Beispiele 1, 2, 3, 4, 5 und 6)

In eine Edelstahlpreßform wird ein Substratstreifen der Abmessungen 60x20x2mm eingelegt und die Form mit der zu testenden additionsvernetzenden Siliconelastomermasse gefüllt. Die Preßvulkanisation erfolgt während 3 min bei einer Temperatur von 120°C und einer Druckkraft von 30 to. Nach Entnahme des Laminates wird der starre Substratkörper fest eingespannt und die maximale Trennkraft bestimmt, die notwendig ist, den anhaftenden Siliconelastomerstreifen im Schälversuch abzulösen. Die Bestimmung der Trennkraft erfolgt gemäß DIN 53531 (mit folgenden Besonderheiten: die Dicke der Trägerplatte betrug 2 mm und die Dicke des Elastomers über der Trägerplatte betrug 4 mm) und wird in N/mm angegeben. Je Beispiel werden 10 Laminate gemessen, die Trennkraft als Mittelwert bestimmt und der Anteil an kohäsivem Versagen in Prozent ermittelt. Kohäsives Versagen von 0% bedeutet, dass das Siliconelastomer vollständig und rückstandsfrei von der Substratoberfläche abgelöst wurde. Kohäsives Versagen von 100% bedeutet, dass die Delaminierung ausschließlich durch Rißwachstum innerhalb des Siliconelastomers erfolgte.

### Substrate

Die Haftung der erfindungsgemäßen sowie nicht erfindungsgemäßen additionsvernetzten Siliconelastomere wurde auf folgenden Substraten getestet:
a) Polybutylenterephthalat (PBT): Ultradur® B4300G6 (BASF AG; 30% GF)
b) Polyamid 6: Durethan® BKV30 (Bayer AG; 30%GF)
c) Polycarbonat (PC): Makrolon® (Bayer AG)
d) Aluminium (Industriequalität; nicht grundiert)
e) Stahl: VA-Stahl (Industriequalität)

**Tabelle 2:**

| (Abrißspannung in [N/mm]; Anteil kohäsives Versagen in [%]) | | | | | | | | | |
|---|---|---|---|---|---|---|---|---|---|
| Beispiel | PBT | | Polyamid 6 | | PC | | Aluminium | Stahl | |
| | [N/mm] | [%] | [N/mm] | [%] | [N/mm] | [%] | [N/mm] | [N/mm] | [%] |
| 1 | 14,8 | 100 | 11,0 | 40 | 15,8 | 100 | 10,0 | 14,4 | 100 |
| 2 | 12,3 | 100 | 10,6 | 30 | 13,9 | 100 | 10,5 | 15,0 | 100 |
| 3 | 11,8 | 100 | 9,3 | 30 | 12,5 | 80 | 8,9 | 12,8 | 100 |
| 4 | 7,1 | 20 | 4,4 | 0 | 7,4 | 20 | 3,2 | 3,8 | 50 |
| 5 | 1,2 | 0 | - | - | 1,0 | 0 | 1,9 | 2,1 | 20 |
| 6 | 1,6 | 0 | - | - | 0,8 | 0 | 2,2 | 1,8 | 10 |

Die in Tabelle 2 angegebenen Werte belegen die hohe Haftfestigkeit zwischen dem erfindungsgemäßen additionsvernetzten Siliconelastomer (Beispiele 1, 2 und 3) und diversen organische Kunststoffen bzw. Metallen. Wie anhand der Beispiele 4 und 5 zu ersehen ist, führt das alleinige Vorhandensein des Bestandteils (C) in Gegenwart von nicht erfindungsgemäßen Si-H-Verbindungen (B) nicht zu einer hohen Haftfestigkeit, sondern nur in Verbindung mit einem erfindungsgemäßen Bestandteil (B). Wie anhand des Beispiels 6 zu ersehen ist, führt auch das alleinige Vorhandensein des Bestandteils (B) nicht zu einer hohen Haftfestigkeit, sondern nur in Verbindung mit einem erfindungsgemäßen Bestandteil (C). Dies ist Beleg einer Synergie der haftungsvermittelnden Bestandteile (B) und (C) der erfindungsgemäßen Siliconzusammensetzung.

## Patentansprüche

1. Additionsvernetzende Siliconzusammensetzungen enthaltend:
(A) Diorganopolysiloxane der allgemeinen Formel (1)
R¹ ₐR² _{b}SiO _{(4-a-b) /2} (1),
in der
**R**^{**1**} Hydroxylrest oder einen monovalenten, gegebenenfalls halogensubstituierten, gegebenenfalls O-, N-, S- oder P-Atome enthaltenden Kohlenwasserstoffrest mit 1 bis 20 Kohlenstoffatomen, der frei von aliphatisch ungesättigten Gruppen ist,
**R**^{**2**} einen monovalenten, aliphatisch ungesättigten, gegebenenfalls halogensubstituierten, gegebenenfalls O-, N-, S- oder P-Atome enthaltenden Kohlenwasserstoffrest mit 1 bis 10 Kohlenstoffatomen, bedeutet,
**a** Werte von 1,0 bis 2,0 bedeuten,
**b** Werte von 0,0003 bis 2 bedeuten, mit der Maßgabe, dass 1.5<(**a+b**)<3.0, dass pro Molekül durchschnittlich mindestens zwei aliphatisch ungesättigte Reste **R**^{**2**} enthalten sind und dass die bei 25°C bestimmte Viskosität der Diorganopolysiloxane (A) 1 mPa.s bis 40 000 Pa.s beträgt,
(B) Organohydrogenpolysiloxane der allgemeinen Formel (2)
R³ _{c}R⁴ _{d}R⁵ ₑH_{f}SiO_{(4-c-d-2e-f)/2} (2),
wobei
**R**^{**3**} einen monovalenten aliphatisch gesättigten Kohlenwasserstoffrest mit 1 bis 20 Kohlenstoffatomen,
**R**^{**4**} (a) einen gegebenenfalls halogensubstituierten monovalenten Kohlenwasserstoffrest mit 6 bis 15 Kohlenstoffatomen, welcher mindestens einen aromatischen C₆-Ring enthält, oder (b) einen halogensubstituierten, gegebenenfalls O-, N-, S- oder P-Atome enthaltenden gesättigten monovalenten Kohlenwasserstoffrest mit 2 bis 20 Kohlenstoffatomen,
**R**^{**5**} einen beidseitig Si-gebundenen bivalenten, gegebenenfalls halogensubstituierten, gegebenenfalls O-, N-, S- oder P- Atome enthaltenden Kohlenwasserstoffrest mit 6 bis 20 Kohlenstoffatomen, bedeutet und
**c, d** und **f** Null und positive Zahlen und **e** positive Zahl bedeu ten, mit der Maßgabe, dass das Organohydrogenpolysiloxan (B) pro Molekül durchschnittlich 5 bis 40 SiH-Gruppen aufweist, dass die Relation: 0,05<100 (d+e)/(c+d+e+f) erfüllt ist und dass die bei 25°C bestimmte Viskosität des Organohydrogenpolysiloxans (B) 1 mPa.s bis 100 Pa.s beträgt,
(C) Haftvermittler 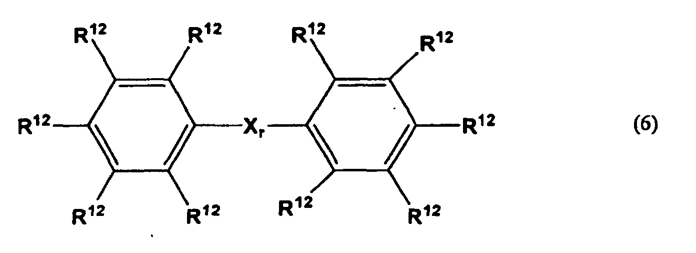 wobei R¹² ein Wasserstoffatom, eine Hydroxylgruppe, ein Halogenatom, eine Alkyl-, Alkenyl-, Alkoxy-, Alkenyloxy- oder Arylgruppe oder eine einwertige organische Gruppe ist, die eine Alkenyl-, Alkoxy-, Glycidyl-, Carbonyl-, Carbonyloxy-, Silyloxy- oder Alkoxysilylgruppe enthält, wobei zumindest einer, der Reste R¹² (eine) Alkenylgruppe(n) oder (eine) Alkenylgruppe enthaltende, einwertige, organische Gruppe ist,
und X ist aus den folgenden Gruppen ausgewählt wird:
-(R¹³-)C(-R¹³)-, -(O=)S(=O)-, -(O=)S-, -C (=O)-,
-O-(CH₃-)Si(-CH₃)-O-, -(CH₂)ₛ- und -O-
worin R¹³ für ein Wasserstoffatom, ein Halogenatom oder eine substituierte oder unsubstituierte Alkyl-, Aryl-, Alkenyl- oder Alkinylgruppe steht und s eine positive Zahl von zumindest 2, vorzugsweise 2 bis 4, ist und r 0 oder 1 bedeutet.
und
(D) Hydrosilylierungskatalysator.

2. Additionsvernetzende Siliconzusammensetzungen nach Anspruch 1, **dadurch gekennzeichnet, dass** Teil 1 die Komponenten A und B sowie gegebenenfalls C und Teil 2 die Komponenten A und D und gegebenenfalls C enthält, wobei C in beiden Teilen gleichzeitig enthalten sein kann, aber zumindest in einem der Teile enthalten sein muss.

3. Additionsvernetzte Siliconelastomere auf der Grundlage der Zusammensetzung der Ansprüche 1 und 2.

4. Verfahren zur Herstellung der additionsvernetzten Siliconelastomere nach Anspruch 3, **dadurch gekennzeichnet, dass** die Komponenten A, B, C und D vermischt werden.

5. Verfahren zum Verbinden der additionsvernetzenden Siliconzusammensetzung nach Anspruch 1 mit einem Substrat, **dadurch gekennzeichnet, dass** die Zusammensetzung auf ein Substrat aufgebracht und erwärmt wird.

6. Verfahren nach Anspruch 5, **dadurch gekennzeichnet, dass** als Substrat ein organischer Kunststoff, Metall oder Glas verwendet wird.

## Claims

1. Addition-crosslinking silicone compositions comprising
(A) diorganopolysiloxanes of the general formula (1)
R¹ ₐR² _{b}SiO _{(4-a-b) /2} (1),
in which
R¹ is a hydroxyl radical or a monovalent, optionally halogen-substituted hydrocarbon radical optionally containing O, N, S or P atoms, having 1 to 20 carbon atoms and being free of aliphatically unsaturated groups,
R² is a monovalent, aliphatically unsaturated, optionally halogen-substituted hydrocarbon radical optionally containing O, N, S or P atoms and having 1 to 10 carbon atoms,
a denotes values from 1.0 to 2.0,
b denotes values from 0.0003 to 2, with the proviso that 1.5<(a+b)<3.0, that on average at least two aliphatically unsaturated radicals R² are present per molecule and that the viscosity of the diorganopolysiloxanes (A) determined at 25°C is 1 mPa.s to 40 000 Pa.s,
(B) organohydropolysiloxanes of the general formula (2)
R³ _{c}R⁴ _{d}R⁵ ₑH_{f}SiO _{(4-c-d-2e-f) /2} (2),
in which
R³ is a monovalent aliphatically saturated hydrocarbon radical having 1 to 20 carbon atoms,
R⁴ is (a) an optionally halogen-substituted monovalent hydrocarbon radical having 6 to 15 carbon atoms which contains at least one aromatic C₆ ring, or (b) a halogen-substituted, saturated monovalent hydrocarbon radical optionally containing O, N, S or P atoms and having 2 to 20 carbon atoms,
R⁵ is a bivalent, optionally halogen-substituted hydrocarbon radical Si-bonded at both ends, optionally containing O, N, S or P atoms and having 6 to 20 carbon atoms and
c,d and f denote zero and positive numbers and e denotes a positive number, with the proviso that the organohydropolysiloxane (B) contains on average 5 to 40 SiH groups per molecule, that the relationship: 0.05<100 (d+e)/(c+d+e+f) is fulfilled and that the viscosity of the organohydropolysiloxane (B) determined at 25°C is 1 mPa.s to 100 Pa.s,
(C) adhesion promoters 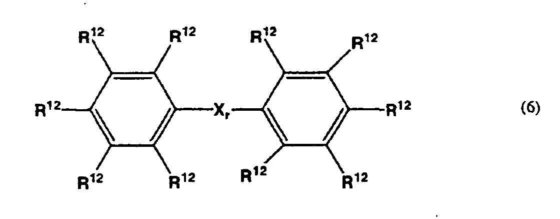 in which R¹² is a hydrogen atom, a hydroxyl group, a halogen atom, an alkyl, alkenyl, alkoxy, alkenyloxy or aryl group or a monovalent organic group containing an alkenyl, alkoxy, glycidyl, carbonyl, carbonyloxy, silyloxy or alkoxysilyl group, at least one of the radicals R¹² being an alkenyl group or a monovalent organic group containing an alkenyl group,
and X is selected from the following groups:
-(R¹³-)C(-R¹³)-, -(O=)S(=O)-, -(O=)S-, -C(=O)-,
-O-(CH₃-)Si(-CH₃)-O-, -(CH₂)ₛ- and -O-
in which R¹³ is a hydrogen atom, a halogen atom or a substituted or unsubstituted alkyl, aryl, alkenyl or alkynyl group and s is a positive number of at least 2, preferably 2 to 4, and r is 0 or 1,
and
(D) a hydrosilylation catalyst.

2. Addition-crosslinking silicone compositions according to Claim 1, **characterized in that** part 1 comprises components A and B and also, if desired, C and part 2 comprises components A and D and, if desired, C, C possibly being present in both parts simultaneously, but necessarily being present in at least one of the parts.

3. Addition-crosslinked silicone elastomers based on the composition according to Claim 1 or 2.

4. Process for preparing the addition-crosslinked silicone elastomers according to Claim 3, **characterized in that** components A, B, C and D are mixed.

5. Method of joining the addition-crosslinking silicone composition according to Claim 1 to a substrate, **characterized in that** the composition is applied to a substrate and heated.

6. Method according to Claim 5, **characterized in that** an organic plastic, metal or glass is used as substrate.

## Revendications

1. Compositions de silicone réticulant par addition comprenant :
(A) des diorganopolysiloxanes de formule générale (1)
R¹ ₐR² _{b}SiO_{(4-a-b) /2} (1),
dans laquelle
R¹ est un radical hydroxyle ou un radical hydrocarboné comprenant 1 à 20 atomes de carbone, monovalent, le cas échéant substitué par un halogène, comprenant le cas échéant des atomes O, N, S ou P, qui est exempt de groupements aliphatiques insaturés,
R² signifie un radical hydrocarboné comprenant 1 à 10 atomes de carbone, monovalent, aliphatiquement insaturé, le cas échéant substitué par un halogène, comprenant le cas échéant des atomes O, N, S ou P,
a signifie une valeur entre 1,0 et 2,0,
b signifie une valeur de 0,0003 à 2, à condition que 1,5<(a+b)<3,0, qu'au moins deux radicaux aliphatiquement insaturés R² soient contenus par molécule et que la viscosité des diorganopolysiloxanes (A) déterminée à 25°C soit de 1 mPa.s à 40 000 Pa.s.
(B) des organohydrogénopolysiloxanes de formule générale (2)
R³ _{c}R⁴ _{d}R⁵ ₑH_{f}SiO_{(4-c-d-2e-f) /2} (2),
dans laquelle
R³ est un radical hydrocarboné comprenant 1 à 20 atomes de carbone, monovalent, aliphatiquement saturé,
R⁴ est (a) un radical hydrocarboné comprenant 6 à 15 atomes de carbone, monovalent, le cas échéant substitué par un halogène, qui comprend au moins un cycle aromatique en C₆ ou (b) un radical hydrocarboné comprenant 2 à 20 atomes de carbone, monovalent, saturé, substitué par un halogène, comprenant le cas échéant des atomes O, N, S ou P,
R⁵ représente un radical hydrocarboné comprenant 6 à 20 atomes de carbone, divalent, lié des deux côtés par Si, le cas échéant substitué par un halogène, comprenant le cas échéant des atomes O, N, S ou P, et
c, d et f signifient zéro et des nombres positifs et e signifie un nombre positif, à condition que l'organohydrogénopolysiloxane (B) présente en moyenne 5 à 40 groupements SiH par molécule, qu'il soit satisfait à la relation 0,05<100(d+e)/(c+d+e+f) et que la viscosité déterminée à 25°C de l'organohydrogénopolysiloxane
(B) soit de 1 mPa.s à 100 Pa.s,
(C) des promoteurs d'adhérence 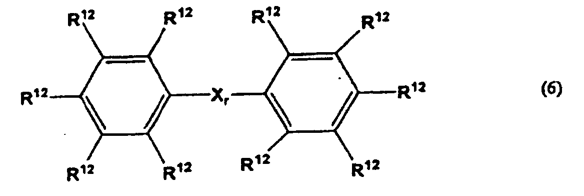 où R¹² est un atome d'hydrogène, un groupement hydroxyle, un atome halogéno, un groupement alkyle, alcényle, alcoxy, alcényloxy ou aryle ou un groupement organique monovalent qui comprend un groupement alcényle, alcoxy, glycidyle, carbonyle, carbonyloxy, silyloxy ou alcoxysilyle, au moins un des radicaux R¹² étant un (des) groupement(s) alcényle ou un groupement organique monovalent comprenant un (des) groupement(s) alcényle, et X est choisi parmi les groupes suivants :
-(R¹³-)C(-R¹³)-, -(O=)S(=O)-, -(O=)S-, -C(=O)-, -O-(CH₃-)Si(-CH₃)-O-, -(CH₂)ₛ- et -O-
où R¹³ représente un atome d'hydrogène, un atome d'halogène ou un groupement alkyle, aryle, alcényle ou alcinyle substitué ou non et s représente un nombre positif d'au moins 2, de préférence 2 à 4, et r représente 0 ou 1, et
(D) un catalysateur d'hydrosilylation.

2. Compositions de silicone réticulant par addition selon la revendication 1, **caractérisées en ce que** la partie 1 comprend les composants A et B et le cas échéant C et la partie 2 comprend les composants A et D et le cas échéant C, C pouvant être contenu dans les deux parties en même temps mais devant être contenu dans au moins une des deux parties.

3. Elastomères de silicone réticulant par addition sur base de la composition des revendications 1 et 2.

4. Procédé pour la préparation des élastomères de silicone réticulant par addition selon la revendication 3, **caractérisé en ce que** les composants A, B, C et D sont mélangés.

5. Procédé pour lier la composition de silicone réticulant par addition selon la revendication 1 avec un substrat, **caractérisé en ce que** la composition est appliquée sur un substrat et est chauffée.

6. Procédé selon la revendication 5, **caractérisée en ce que** l'on utilise comme substrat un matériau synthétique organique, un métal ou du verre.
